# EUROPÄISCHE PATENTSCHRIFT

(11) **EP 3 805 613 B1**
(45) Veröffentlichungstag und Bekanntmachung des Hinweises auf die Patenterteilung: **17.01.2024**
(21) Anmeldenummer: 20195024.3
(22) Anmeldetag: 08.09.2020
(51) Int. Cl.: F16H 57/04, F16H 55/36, A01D 69/06, A01D 69/12, F16H 7/08, A01F 29/14, F16H 57/08, A01D 41/00, F16H 57/02

(54) **SCHMIERUNGSANORDNUNG FÜR EIN GETRIEBE**
LUBRICATION ASSEMBLY FOR TRANSMISSION
AGENCEMENT DE LUBRIFICATION POUR UN ENGRENAGE

(30) Priorität: 10.10.2019 DE 102019215554
(43) Veröffentlichungstag der Anmeldung: 14.04.2021
(73) Patentinhaber: Deere & Company, Moline, IL 61265 (US)
(72) Erfinder: RUIZ, Francisco de Asis F, 68163 Mannheim (DE); VERGARA MARTINEZ, Daniel, 68163 Mannheim (DE); BRIDGES, Jonathan D, 68163 Mannheim (DE); JUNDALE, Prashant M, 68163 Mannheim (DE); MORENO, Jorge, 68163 Mannheim (DE)
(74) Vertreter: Reichert, Christian

(56) Entgegenhaltungen:
- DE-A1-102012 210 695
- US-A- 3 182 527
- US-A- 3 383 937
- US-A1- 2013 283 955

## Beschreibung

Die Erfindung betrifft eine Schmierungsanordnung für eine Welle und deren Lagerung. Ferner betrifft die Erfindung ein Getriebe mit einer solchen Schmierungsanordnung und eine Erntemaschine mit einer solchen Schmierungsanordnung.

Getriebe, sowie Antriebsvorrichtungen mit Getrieben für antreibbare Bearbeitungseinrichtungen an Erntemaschinen sind bekannt und werden in verschiedener Form vielseitig eingesetzt. So offenbart beispielsweise die DE 2 745 564 C2 eine Antriebsvorrichtung für eine Bearbeitungseinrichtungen eines Mähdreschers, mit einem Riementrieb und einer Riemenscheibe, die auf einer zu einer Hauptantriebswelle konzentrischen Hohlwelle angeordnet ist. Auf der Hohlwelle ist ein Antriebszahnrad angeordnet und ein Schaltelement vorgesehen, welches in zwei Stellungen axial verschiebbar ist und die Hauptantriebswelle wahlweise mit jeweils einem mit dem Antriebszahnrad in Verbindung stehenden Zahnrad unterschiedlicher Drehrichtung verbindet, wobei das Schaltelement in einer ersten Stellung ein Sonnenrad eines Planetengetriebes über Planetenräder und ein zweites Sonnenrad mit der Hauptantriebswelle verbindet und in einer zweiten Stellung das Sonnenrad des Planetengetriebes über Planetenräder und einen Zahnkranzträger mit der Hauptantriebswelle in Verbindung bringt.

Die DE 2 744 344 C3 offenbart ebenfalls eine Antriebsvorrichtung für Erntemaschinen mit einem Riementrieb, welcher eine auf einer Abtriebswelle drehbar gelagerte Abtriebsscheibe aufweist. Der Riementrieb ist direkt oder über ein wahlweise zuschaltbares Reduziergetriebe indirekt mit einer Abtriebswelle in Antriebsverbindung bringbar, beispielsweise mit einer Abtriebswelle für eine Dreschtrommel.

DE102012210695 beschreibt einen Planetentrieb mit einem Gehäuse und mit einem darin gelagerten Sonnenrad und einem Planetenradträger mit mehreren daran gelagerten Planetenrädern, wobei ein gehäuseseitig festgelegtes Schmiermittelleitblech mit einer dem Sonnenrad gegenüberliegenden Abtropfkante vorgesehen ist.

US3182527 zeigt ein Differentialträgergehäuse und ein Achsgehäuse, die mit zusammenwirkenden Mitteln zum Leiten des Schmiermittelflusses innerhalb der Gehäuse versehen sind, wobei solche Mittel ein Paar Primärkollektor-Ablenkbleche 48 und 50 umfassen. Das Sammelleitblech 48 hat eine Rückplatte 52, eine Bodenwand 54, eine Seitenwand 56 und eine Vorderwand 58, wodurch ein wannenartiges Element definiert wird, wobei das Element durch seine Rückwand befestigt ist 52 an dem Differentialträgergehäuse 12 befestigt ist und auch mit seiner Bodenwand 54 an der Oberseite des Differentialträgers 20 befestigt ist.

US3383937 beschreibt ein Schmiersystem für eine Antriebsanordnung, ein Gehäuse, das ein Zahnrad umgibt und einen Schmiermittelvorrat enthält, einen Schmiermittelzuführkanal, der in einem ersten Zahnrad vorgesehen ist und das Innere des erwähnten Gehäuses mit dem Inneren eines anderen Gehäuses verbindet, das die Kupplung umgibt.

Aus dem Stand der Technik sind auch andere Anordnungen von Schalteinrichtungen für Getriebe, insbesondere auch in Verbindung mit Riementriebe bekannt, die in landwirtschaftlichen Maschinen, insbesondere Erntemaschinen mit Bearbeitungseinrichtungen für aufgenommenes Erntegut, Anwendung finden. Dazu gehören beispielsweise Mähdrescher, Feldhäcksler oder auch Zuckerrohrernter oder auch andere Erntemaschinen, die eine Bearbeitung für aufgenommenes Erntegut in der Maschine vorsehen. So kann im Erntegutfluss beim Ernten des Ernteguts ein Dreschen, Häckseln, Schneiden oder eine andere Art der Bearbeitung vorgesehen sein, wobei für die Bearbeitungseinrichtungen, wie beispielsweise eine Häckseltrommel, verschiedene Antriebsstufen und damit eine Drehzahlvariation vorgesehen sind.

So sind beispielsweise Mähdrescher mit Häckseleinrichtungen bekannt, die einer Drescheinrichtung und einer Siebeinrichtung nachgeschaltet sind und ein Häckseln des überbleibenden Ernteguts vornehmen. Derartige Häckseleinrichtungen umfassen Häckseltrommeln, die, über einen Riemenantrieb angetrieben, beispielsweise in zwei verschiedenen Drehzahlen über ein entsprechendes Getriebe antreibbar sind. Die unterschiedlichen Drehzahlen dienen der Anpassung der Häckseleinrichtung an das Erntegut selbst sowie Anforderungen des Betreibers an das Häckselergebnis (Häcksellänge des Ernteguts). Dabei sind seitens des Betreibers auch Drescharbeiten ohne nachgeschaltetem Häckselbetrieb wünschenswert. Häckseleinrichtungen werden üblicherweise durch Riementriebe angetrieben, wobei der Riementrieb von einer mit dem Antriebsmotor der Erntemaschine verbundenen Riemenscheibe abgezweigt wird. Somit steht die Häckseleinrichtung in der Regel direkt mit der Drehzahl des Antriebsmotors in Verbindung, was dazu führt, dass auch die Komponenten an der Häckseleinrichtung, wie Dichtungen, Lager, Schmierung direkt von der der Drehzahl des Antriebsmotors beeinflusst sind. Da hohe Drehzahlen mitunter erforderlich sind, sind derartige Komponenten entsprechend auch für diese hohen Drehzahlen auszulegen, um auch den damit verbundenen hohen Temperaturen gerecht zu werden und Schäden, insbesondere bei Dichtungen zu vermeiden und den Verschleiß derselben zu reduzieren.

Die Antriebseinheiten, die zugehörigen Getriebe, Verzahnungen, Lager und Kupplungen benötigen kontinuierliche Schmierung. Insbesondere wird durch die konstante Rotation von Zahnrädern, Wellenabschnitten und anderen Aufbauten fortwährend der Schmierstoff verwirbelt und in den zugehörigen Gehäuseabschnitten verteilt bzw. zerstäubt. Durch die Verwirbelung und die großflächige Verteilung nimmt das Schmiermittelniveau im Gehäuse ab und der Rücklauf findet mit Verzögerung statt, so dass insbesondere der innere Bereich des Getriebes nahe der Rotationsachsen, die Wellenlagerung und Wellendichtungen nicht mehr ausreichend geschmiert werden. Als ein Ausgleich kann eine höhere Menge Schmierstoff im Gehäuse vorgesehen werden. Dies führt jedoch zu einem wiederrum erhöhten Schmierstoffverlust durch die Dichtungen, da durch die Rotation der bewegten Teile auch eine Pumpbewegung umgesetzt wird, die Schmierstoff aus dem Gehäuse transportiert. Des Weiteren führt ein erhöhter Schmierstoffspiegel zu größeren Planschverlusten und damit zu einem erhöhten Energieverbrauch. Bei Dichtungen, die nicht auf einen konstanten Massenstrom ausgelegt sind, kann durch die Pumpeffekte auch der Verschließ erhöht sein und zu einem schnelleren Versagen führen.

Die der Erfindung zugrunde liegende Aufgabe wird darin gesehen, eine Schmierungsanordnung vorzusehen, welche diese Probleme vermeidet.

Die Aufgabe wird erfindungsgemäß durch die Lehre des Patentanspruchs 1,5 und 6 gelöst. Weitere vorteilhafte Ausgestaltungen und Weiterbildungen der Erfindung gehen aus den Unteransprüchen hervor.

Erfindungsgemäß ist Schmierungsanordnung wie in dem Anspruch 1 vorgesehen.

Durch die Anordnung kann verteilter Schmierstoff aufgefangen und in kurzer Zeit wieder an die Lagerung der Welle zugeführt werden. Die großflächige Verteilung im Gehäuse wird durch den Schmierstoffdeflektor kompensiert bzw. verringert. Ein Schmiermittelmangel an der Lagerung wird dadurch unterbunden. Die verbesserte Schmierung ermöglicht eine bessere Temperaturkontrolle, insbesondere der Lagerung und der Dichtungen des Gehäuses. Die Schmierungsanordnung erhöht den Durchsatz von Schmiermittel und somit die Kontrolle der thermischen Belastung der Anordnungskomponenten. Die verbesserte Rückflussrate des Schmierstoffes führt zu einer verbesserten Kontrolle des Durchflusses und erhöhter Lebensdauer der Wellendichtungen. Die Schmierungsanordnung vermindert den Einfluss von Drehzahlschwankungen der Welle auf die Schmierstoffzuführung. Instabile Betriebszustände haben einen geringeren Einfluss auf die Schmierung und die Lebensdauer der Lagerung.

Der Schmierstoffdeflektor kann in einem Gehäusebereich befestigt sein, der benachbart zu einem Lager ist.

Die räumliche Nähe des Schmierstoffdeflektors kann eine gute Zuführung an die Lager sicherstellen. Durch die sich einstellende Schmierstoffströmung durch die Lagerung hindurch, bedingt durch eine Sogwirkung aufgrund der Wellenrotation, kann eine konstante und gleichbleibende Schmierstoffmenge zu- und abgeführt werden, dies führt auch zu einer Verbesserung der thermischen Belastung auf die Lagerung.

Das Gehäuse weist eine Bohrung auf, in welche der Schmierstoff unter Einwirkung von Schwerkraft vom Schmierstoffdeflektor abfließt.

Die Bohrung kann in einem Bereich des Gehäuses angebracht sein, in welchen auch ein Lager vorgesehen ist. Die Schmierstoffzuführung kann verkürzt werden und der Durchfluss wird erhöht. Denkbar ist auch eine Bohrung in einen Spalt zwischen dem Gehäuse mit eingebautem Lager und der Welle.

Der Schmierstoffdeflektor kann direkt in der Bohrung befestigt sein.

Die Bohrung wird gleichzeitig als Befestigung und als Schmierstoffleitung verwendet. Der Schmierstoffdurchfluss wird dadurch verbessert und der Weg verkürzt. Dies führt zu einer höheren Rückführrate des Schmierstoffs.

Der Schmierstoffdeflektor als erste Alternative weist eine Prallfläche auf, die parallel zur Längsachse der Welle orientiert ist, so dass der Schmierstoff auf die Prallfläche geschleudert wird und am Schmierstoffdeflektor abläuft.

Die Prallfläche dient zum Auffangen des verwirbelten Schmierstoffs und gleichzeitig der Ableitung und Zuführung an die Welle und die Lagerung. Durch die Prallfläche wird die Rückführrate des Schmierstoffs erhöht und die Drehzahlschwanken der Welle, sowie die Erhöhung der Verwirbelungsrate, wird ausgeglichen.

Der Schmierstoffdeflektor als zweite Alternative ist ein Rohr, mit einer Öffnung an einem oberen Ende, die entgegen der Rotationsrichtung der Welle vorgesehen ist, so dass Schmierstoff durch die Rotation in die Öffnung befördert wird und innerhalb der Rohrs abläuft.

Die Öffnung lässt den Schmierstoff in das Rohr eintreten, wobei dieser im Inneren abläuft und der Lagerung zugeführt wird. Dabei kann das Rohr ein beliebiges Rohr mit fest bestimmten Durchmesser sein, wodurch ein zusätzliche Bearbeitung entfallen kann. Darüber hinaus kann auch über die äußere Oberfläche Schmierstoff aufgefangen und abgeleitet werden, wodurch eine genaue Einstellbarkeit der Durchflussrate ermöglicht ist.

Der Schmierstoffdeflektor kann im Wesentlichen einen L-förmigen Querschnitt aufweisen. Durch den im Wesentlichen rechtwinkligen Querschnitt über im Wesentlichen gesamte freie Länge oder Höhe des Schmierstoffdeflektors kann eine Prallfläche zum Auffangen des Schmierstoffs bereitgestellt werden. Dabei kann die Form durch die Breite und Höhe der Prallfläche an eine gewünschte Rückführrate angepasst werden. Der Schmierstoff läuft dann entlang der beiden Oberflächen der L-Form durch die Schwerkraft nach unten zur Welle und zur Lagerung.

Der Schmierstoffdeflektor kann im Wesentlichen einen U-förmigen Querschnitt aufweisen. Der U-förmige Querschnitt bildet eine Rinne aus, mit der sowohl der Schmierstoff aufgefangen, als auch abgeleitet wird. Durch die U-Form erhält der Schmierstoffdeflektor Formstabilität und ist mit einfachen Werkstoffen herstellbar.

Erfindungsgemäß ist weiterhin eine Getriebeanordnung vorgesehen, die Schmierungsanordnung der vorgenannten Art aufweisen kann.

Die Erfindung betrifft weiterhin eine Erntemaschine, die eine Schmierungsanordnung der vorgenannten Art aufweisen kann.

Die Erfindung mit weiteren Beispielen und Ausführungen wird anhand der Zeichnungen weiter erläutert. Dabei zeigt
Figur 1 eine Erntemaschine nach dem Stand der Technik;
Figur 2 ein Getriebe mit Riemenantrieb nach dem Stand der Technik;
Figur 3 ein Getriebe mit einer Ausführung der Erfindung;
Figur 4 ein Getriebe mit einer Ausführung der Erfindung;
Figur 5 eine erfindungsgemäße Ausführung des Schmierstoffdeflektors;
Figur 6 eine erfindungsgemäße Ausführung des Schmierstoffdeflektors;
Figur 7 eine erfindungsgemäße Ausführung des Schmierstoffdeflektors;
Figur 8 eine erfindungsgemäße Ausführung des Schmierstoffdeflektors;
Figur 9 eine erfindungsgemäße Ausführung des Schmierstoffdeflektors;
Figur 10 ein Getriebe mit einer Ausführung der Erfindung.

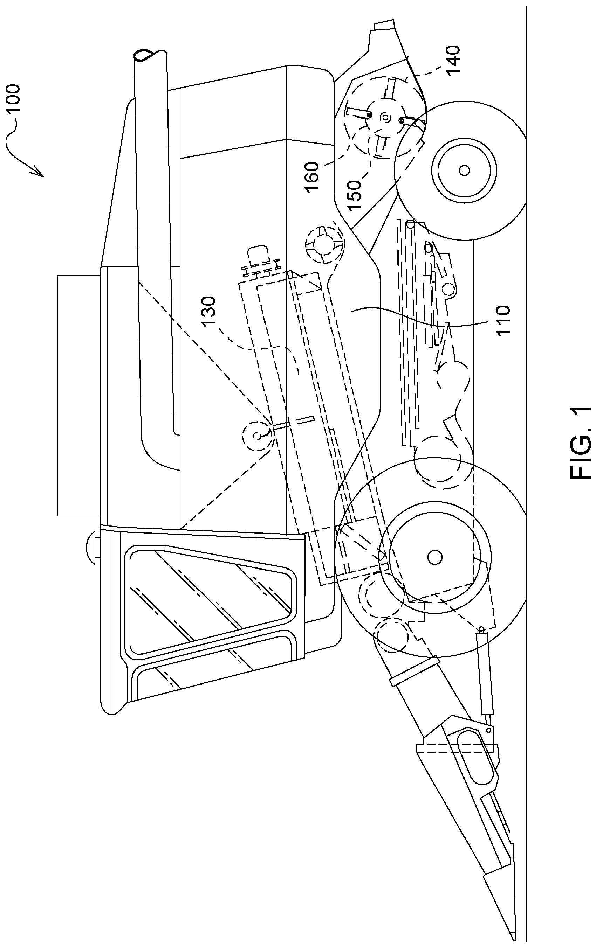

Figur 1 zeigt eine selbstfahrende landwirtschaftliche Maschine 100, die beispielhaft in Form eines Mähdreschers ausgebildet ist. Es ist ausführbar, dass das im Folgenden weiter beschriebene Ausführungsbeispiel auch an einer andersartigen selbstfahrenden landwirtschaftlichen Maschine 100, beispielsweise einem Feldhäcksler, einer Mähmaschine, einem Zuckerrohrernter oder einer Ballenpresse ausgebildet sein kann. Die landwirtschaftliche Maschine 100 weist ein Maschinengehäuse 110 und eine erste Bearbeitungseinrichtung in Form einer Drescheinrichtung 130 mit einem in Längsrichtung der landwirtschaftlichen Maschine 100 ausgerichteten Axialrotor auf. Die landwirtschaftliche Maschine 100 wird von einem (nicht dargestellten) Verbrennungsmotor angetrieben. Der Verbrennungsmotor ist ausgangsseitig mit einem Antriebsriemen verbunden, durch welchen eine weitere Bearbeitungseinrichtung, hier eine Häckseleinrichtung 140 mit Häckseltrommel 150, angetrieben wird. Der Antriebsriemen ist dazu mit einer Riemenscheibe 160 verbunden, die als Antriebselement für ein Getriebe der Häckseleinrichtung 140 dient.

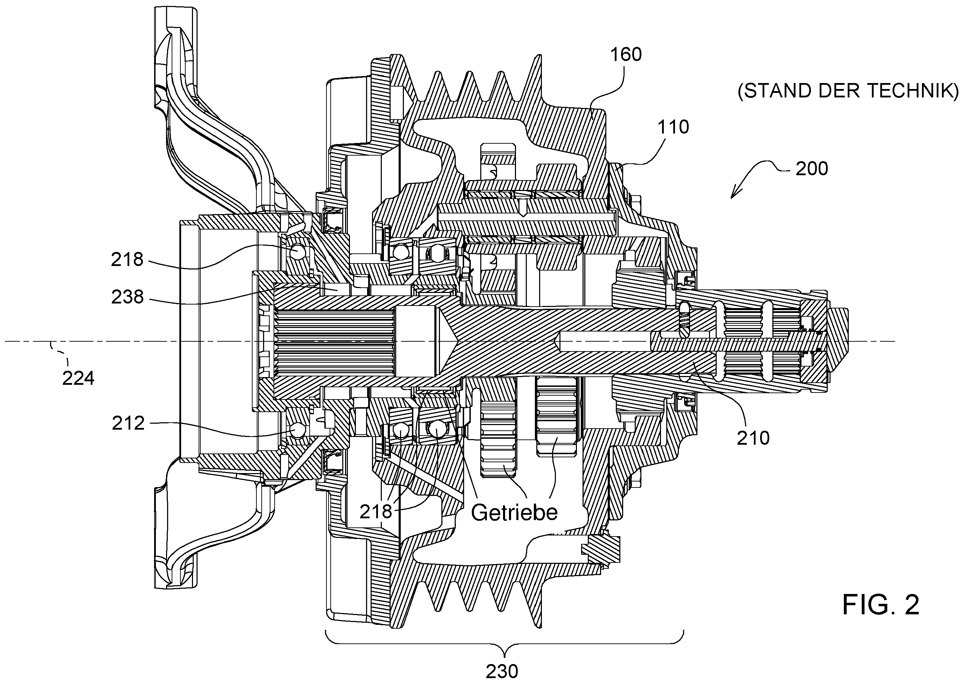

Das Getriebe nach dem Stand der Technik ist detailliert in Figur 2 dargestellt und umfasst, neben der Riemenscheibe 160, einen in der Riemenscheibe 160 gelagerten Doppelplanetenrädersatz, wobei die Riemenscheibe 160 als Planetenträger dient, eine in der Riemenscheibe 160 ausgebildete Innenverzahnung, sowie eine Getriebewelle 210, die als Abtriebswelle dient und zum Antrieb der Häckseltrommel 150 mit dieser verbindbar ist.

Das Getriebe umfasst ferner eine als Hohlprofil ausgebildete Nabe, welche einen, bezogen auf die Riemenscheibe 160, innen liegenden Teil und einen damit drehfest verbundenen außen liegenden Teil umfasst. Der außen liegende Nabenteil ist mit einem am Maschinengehäuse 110 ausgebildeten Befestigungsflansch drehfest verbunden. Auf dem innen liegenden Nabenteil ist ein Sonnenrad ausgebildet, welches mit einem ersten Planetenrädersatz des Doppelplanetenrädersatzes in Eingriff steht. Die Nabe dient ferner zur Lagerung der Riemenscheibe 160 und der Getriebewelle 210, wobei die Riemenscheibe 160 axial fixiert und rotierbar auf der Außenumfangsseite der Nabe am innen liegenden Nabenteil gelagert ist. Die Getriebewelle 210 ist axial fixiert und rotierbar auf der Innenumfangsseite der Nabe gelagert, wobei eine erste Lagerstelle 218 am außen liegenden Nabenteil und eine zweite Lagerstelle 218 am innen liegenden Nabenteil ausgebildet ist.

Die Getriebewelle 210 weist an einem sich innerhalb der Riemenscheibe 160 erstreckenden Ende eine Außenverzahnung und an einem sich innerhalb der Befestigungsnabe erstreckenden Ende in einem Hohlraum ausgebildete Innenverzahnung auf. Die im Hohlraum ausgebildete Innenverzahnung dient zum Anschluss der Getriebewelle 210 an die Häckseleinrichtung 140 bzw. Häckseltrommel 150. Ferner ist das Getriebe mit einer Schalteinrichtung ausgestattet.

Das Gehäuse 110 umschließt das Getriebe und eine Seite der Riemenscheibe 160 und enthält Schmierstoff, üblicherweise ein Schmieröl, der zur Schmierung und auch zum Wärmetransport innerhalb des Gehäuses 110 dient. Die Getriebewelle 210 ist mittels Lagerung 212, bestehend aus Kugel- und Wellenlagern im Gehäuse 110 drehbar gehalten. Die Schmierung der Lagerung 212 und der rotierenden Teile stellt die Betriebsfunktion sicher und erhöht die Lebensdauer. Aufgrund der Rotation der Welle 210 und der damit im Eingriff stehenden Komponenten des Getriebes erfolgt eine Verteilung des Schmierstoffs im Gehäuse 110 durch eine Verwirbelung an den rotierenden Oberflächen. Mit zunehmender Drehzahl erhöht sich auch die Verteilrate, so dass der Schmierstoff durch die Zentrifugalkräfte an die Gehäusewandung geschleudert wird. Der Schmierstoff steht somit einer Schmierung der Welle 210 und deren Lagerung 212 nicht mehr zur Verfügung, bis ein Rücklauf entlang der Gehäuseflächen erfolgt. Besonders bei länger andauernden und höheren Drehzahlen ergibt sich dadurch die Gefahr einer Unterversorgung und eines entsprechenden Schmierfilmverlusts innerhalb der Lager 218.

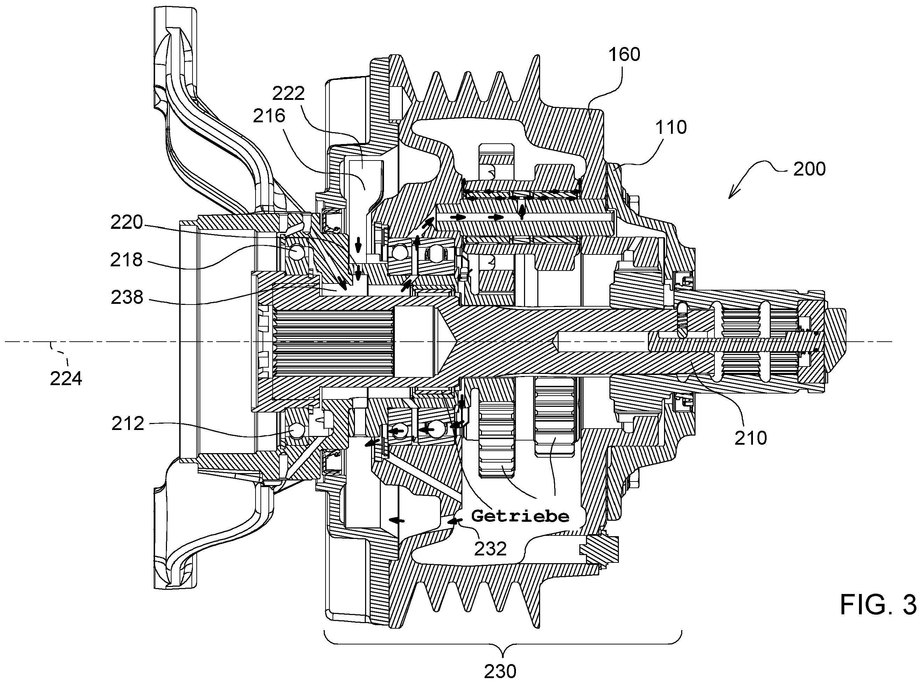

Fig. 3 zeigt eine erfindungsgemäße Ausführung. Hierbei ist ein Schmierstoffdeflektor 216 an der Welle 210 vorgesehen. Dieser weist eine Prallfläche 222 auf, welche dazu dient, den von der Welle 210 und der damit verbundenen Bauteile verwirbelten Schmierstoff aufzufangen und wieder an einen zentralen Gehäusebereich zu leiten. Der Schmierstoffdeflektor 216 ist an einem Abschnitt des Gehäuses 110 befestigt und kann in einer Bohrung 220 an diesem gehalten sein. Durch die Bohrung 220 kann der Schmierstoff gezielt an einen Zwischenraum 238, der auf einer Seite durch ein Lager 218 begrenzt wird, abfließen und das Lager 218 versorgen. Der Schmierstoffdeflektor 216 ist an einem nach oben orientierten Abschnitt des Gehäuses 110 befestigt, so dass durch Einwirkung der Schwerkraft der Schmierstoff abließen kann. Die Bohrung 220 kann durch einen Kanal mit einem Zwischenraum 238 verbunden sein oder direkt benachbart zu einem Lager 218 platziert sein. Besonders Nadellager, die räumlich sehr niedrig aufgebaut sind, können durch den Schmierstoffdeflektor 216 an der Welle 210 mit Schmierstoff versorgt werden.

Aufgrund des Schmierstoffdeflektors 216 stellt sich ein Schmierstoffkreislauf 232 ein, wie dies in Fig. 3 gezeigt ist. Durch die Ableitung von Schmierstoff an die Welle 210 und die Lagerung 212 und durch die Rotation der Welle 210 im Betrieb baut sich ein Schmierstoffstrom 232 auf, der zunächst vom Schmierstoffdeflektor 216 durch die Lagerung der Welle 210 erfolgt, um dann in einem zweiten Teilstrom einen Wellenabschnitt mit den Planetenzahnrädern zu durchlaufen. Ein weiterer Teilstrom durchläuft, ausgehend von den Planeten, die Lager 218 in axialer Richtung und tritt an einem axialen Ende der Riemenscheibe 160 im Gehäuse 110 aus. Dieses Durchströmen stellt die Schmierung und die Wärmeableitung sicher. Im Anschluss erfolgt die Verteilung im Gehäuse 110 durch die Schleuderwirkung der rotierenden Teile und der Kreislauf beginnt erneut.

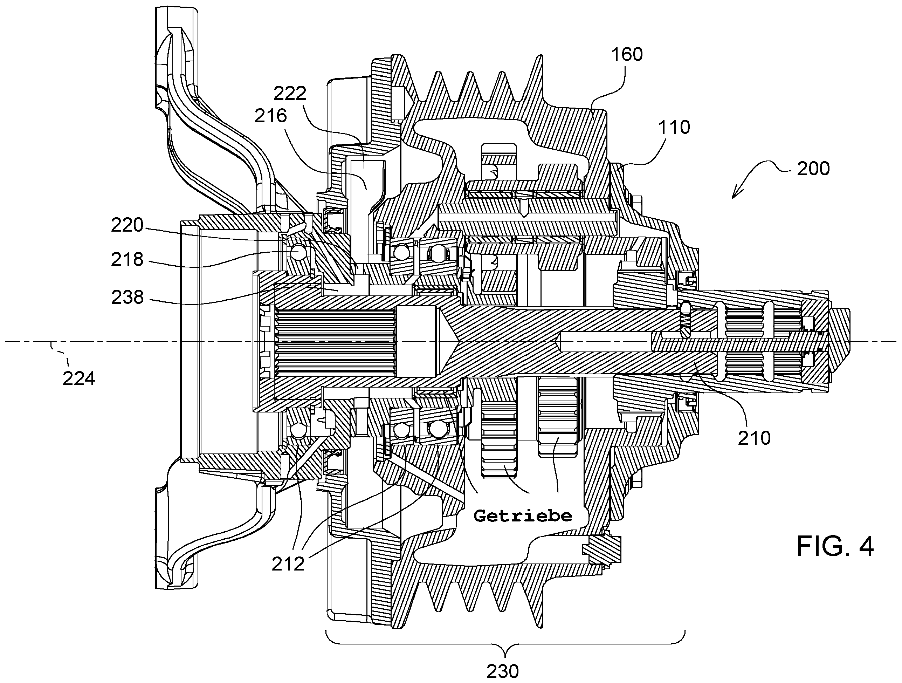

Fig. 4 zeigt einen Schnitt einer erfindungsgemäßen Ausführung ohne den Schmierstoffkreislauf. Der Schmierstoffdeflektor 216 weist eine Prallfläche 222 auf, die entgegen der Rotationsrichtung der Welle 210 oder der Rotationsrichtungen der Riemenscheibe 160 oder des Getriebes orientiert ist. Durch eine Leitung des Schmierstoffes mittels Kanälen, Bohrungen, Öffnungen und Zwischenräumen kann die Schmierstoffversorgung auch bei länger andauernden höheren Drehzahlen aufrechterhalten werden. In der Regel erfolgt ein Betrieb vorgesehener Getriebe bei 1000 bis 4000 Umdrehungen pro Minute, bevorzugt bei 1500 bis 3500, besonders bevorzugt bei 2000 bis 3000 Umdrehungen pro Minute. Figure 4 entspricht in allen gezeigten Teilen Fig. 3.

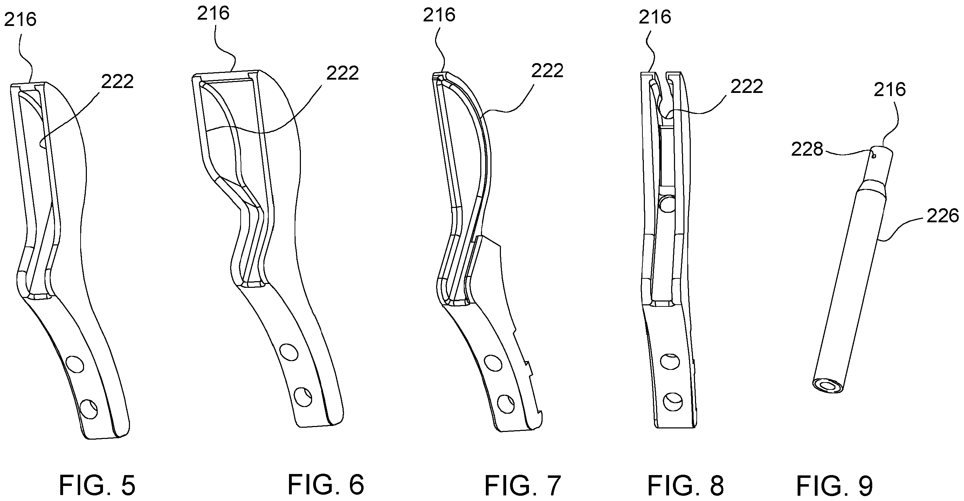

Figuren 5 bis 9 zeigen unterschiedliche Ausführungen des erfindungsgemäßen Schmierstoffdeflektors 216. Sämtliche Ausführungen bis auf Fig. 9 weisen Bohrungen zur Befestigung am Gehäuse 110 auf. Es können jedoch auf andere Befestigungsarten vorhanden sein. Fig. 9 zeigt eine rohrförmige Gestalt, so dass der Schmierstoffdeflektor 216 durch eine Presspassung oder eine Verklemmung mittels einer zusätzlichen Verschraubung befestigt werde kann. Dies kann auch für die weiteren Ausführungen vorgesehen werden.

In Fig. 5 weist der Schmierstoffdeflektor 216 eine Schaufelform auf, in deren Inneren Prallflächen 222 vorhanden sind, durch die verteilter und zerstäubter Schmierstoff eingefangen und an der Innenfläche der Schaufel, die durch zwei Seitenwände begrenzt wird, in Richtung der Schwerkraft ablaufen kann. Durch die Breite und Höhe der Prallflächen 222 und der Schaufel kann Einfluss auf das Einfangen und Ableiten des Schmierstoffs genommen werden, so dass je nach Abmessungen eine Anpassung an spezifische Anforderungen des Getriebes vorgenommen werden kann.

Fig. 6 zeigt einen Schmierstoffdeflektor 216, der im Bereich der schaufelartigen Prallflächen 222 asymmetrisch ausgebildet ist. Hierdurch kann der Rückfluss an besondere bauliche Anforderungen und Bauraumbegrenzungen angepasst werden.

Fig. 7 stellt einen schmalen Schmierstoffdeflektor 216 dar, der über Prallflächen 222 in Form einer Umlaufkante an einer Seite des Schmierstoffdeflektors 216 verfügt. Durch die im Einbauzustand sich in axialer und Richtung ersteckende Höhe der Umlaufkante und die radiale Höhe wird Einfluss auf die eingefangene Schmierstoffmenge genommen. Die Ausführung ist besonders für sehr schmale Bauraumbegrenzungen geeignet.

Fig. 8 zeigt einen Schmierstoffdeflektor 216, der über wenigstens eine Bohrung an einer Rückseite verfügt. Durch das Vorsehen von Bohrungen in den Prallflächen 222 kann eine einfache Anpassung an die gewünschte Schmierstoffrückführrate vorgenommen werden. Es können auch andersförmige Öffnungen in die Prallflächen 222 eingebracht werden, z.B. ovale, eckige Öffnungen und Durchbrüche. Die Ausführung weist auch einen Durchbruch an der oberen Kante auf, um die Rückflussrate zu beeinflussen.

Fig. 9 zeigt eine Ausführung als Rohr 226. Entgegengesetzt zur Rotationsrichtung oder zur Verteilrichtung des Schmierstoffs weist das Rohr 226 eine Öffnung 228 auf, durch die Schmierstoff eintritt und im Inneren zurückgeführt werden kann. Mit Hilfe des Durchmessers der Bohrung kann die Rückführrate eingestellt werden, aber auch durch den Durchmesser des Rohres 226, da an seiner Außenfläche ebenfalls Schmierstoff eingefangen und zurückgeführt wird, wenn auch in begrenztem Umfang, wobei dieses Schmierstoff nicht in die Bohrung 220 zurückgeführt wird. Diese Ausführung erlaubt einen sehr genauen Einstellbereich für die Rückführrate des Schmierstoffs durch das Innere und durch die Bohrung 220 in den Zwischenraum 238 zwischen Lager 218 und Gehäuse 110. Durch die kleine Öffnung 228 kann der Druck im Schmierstofffluss sehr genau eingestellt werden, wobei eine zu starke Rückführrate zu vermeiden ist, um Schäden, besonders an den Dichtungen zu vermeiden. Mit der Ausführung kann der Druck sehr genau eingestellt werden.

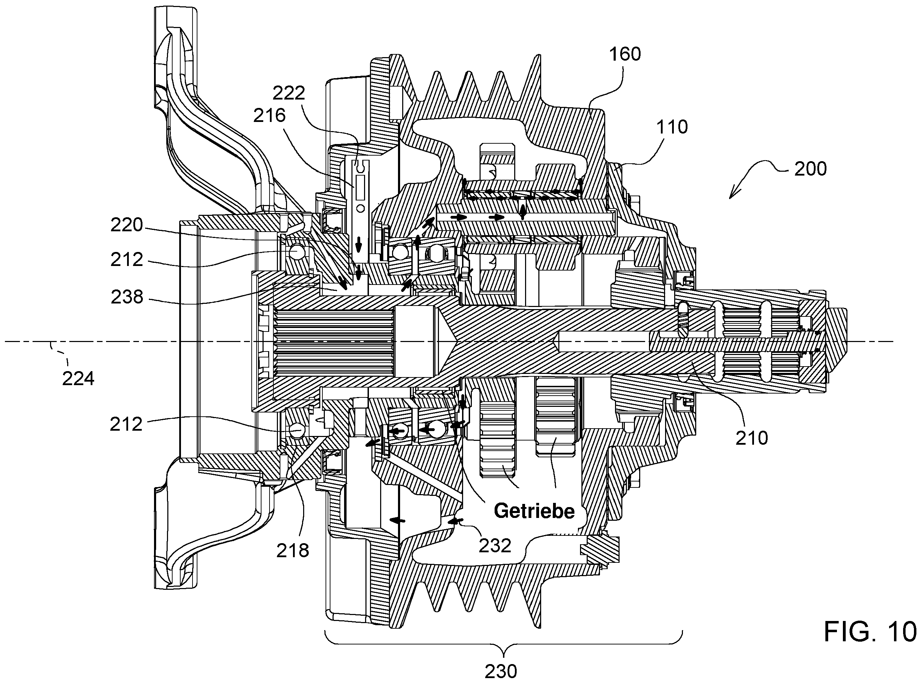

Fig. 10 zeigt eine weitere Ausbildung des Schmierstoffdeflektors 216 gemäß der Version nach Figur 8. Im Vergleich mit dem bereits gezeigten Ausführungsbeispiel nach Fig. 2 oder 4 fällt die schmalere Gestaltung auf. Hierdurch wird weniger Schmierstoff eingefangen, zusätzlich zu den vorhandenen Öffnungen in den Prallflächen 222. Dadurch wird der gleiche Schmierfilmtransport in Gang gesetzt, jedoch mit einer geringeren Flussrate, so dass weniger Belastung für die Dichtungen erzeugt wird.

Es ist ersichtlich, dass die gezeigten Ausführungen zu unterschiedlichen Flussraten führen kann. Auch kann durch eine andere Platzierung des Schmierstoffdeflektors 216 eine Anpassung an andere Lagerpositionen, Lageranzahl, Getriebeaufbau und Drehzahlniveau vorgenommen werden.

## Patentansprüche

1. Schmierungsanordnung (200), aufweisend
wenigstens ein Gehäuse (110),
wenigstens eine Welle (210),
wenigstens eine Lagerung (212), die dazu ausgelegt ist, die Welle (210) im Gehäuse (110) zu halten und rotieren zu lassen,
Schmierstoff, der bei Rotation der Welle (210) im Gehäuse (110) verteilt wird, einen Schmierstoffdeflektor (216), der ortsfest zum Gehäuse (110) oberhalb der Welle (210) vorgesehen ist,
wobei auf dem Schmierstoffdeflektor (216) Schmierstoff auftrifft und durch Einwirkung von Schwerkraft der Schmierstoff an die Lagerung (212) der Welle (210) geleitet wird, so dass die Lagerung (212) mit Schmierstoff versorgt wird,
wobei das Gehäuse (110) eine Bohrung (220) aufweist, in welche der Schmierstoff unter Einwirkung von Schwerkraft vom Schmierstoffdeflektor (216) abfließt,
**dadurch gekennzeichnet dass** der Schmierstoffdeflektor (216) als erste Alternative eine Prallfläche (222) aufweist, die parallel zu einer Längsachse (224) der Welle (210) orientiert ist, so dass der Schmierstoff auf die Prallfläche (222) geschleudert wird und am Schmierstoffdeflektor (216) abläuft oder
der Schmierstoffdeflektor (216) als zweite Alternative ein Rohr (226) ist, mit einer Öffnung (228) an einem oberen Ende, die entgegen der Rotationsrichtung der Welle (210) vorgesehen ist, so dass Schmierstoff durch die Rotation in die Öffnung (228) befördert wird und innerhalb der Rohrs (226) abläuft.

2. Schmierungsanordnung (200) nach Anspruch 1, wobei der Schmierstoffdeflektor (216) direkt in der Bohrung (220) befestigt ist.

3. Schmierungsanordnung (200) nach einem der vorangehenden Ansprüche 1 bis 2, wobei der Schmierstoffdeflektor (216) der ersten Alternative Wesentlichen einen L-förmigen Querschnitt aufweist.

4. Schmierungsanordnung (200) nach einem der vorangehenden Ansprüche 1 bis 2, wobei der Schmierstoffdeflektor (216) der ersten Alternative im Wesentlichen einen U-förmigen Querschnitt aufweist

5. Getriebeanordnung (230) aufweisend eine Schmierungsanordnung (200) nach einem der Ansprüche 1 bis 4.

6. Erntemaschine (100), aufweisend eine Schmierungsanordnung (200) nach einem der Ansprüche 1 bis 4.

## Claims

1. Lubrication arrangement (200), comprising
at least one housing (110),
at least one shaft (210),
at least one bearing system (212) which is designed to hold the shaft (210) in the housing (110) and to permit said shaft to rotate,
lubricant which is distributed in the housing (110) with the rotation of the shaft (210),
a lubricant deflector (216) which is provided in a stationary manner relative to the housing (110) above the shaft (210),
wherein lubricant strikes against the lubricant deflector (216) and by the action of gravity the lubricant is conducted to the bearing system (212) of the shaft (210) so that the bearing system (212) is supplied with lubricant, wherein
the housing (110) has a bore (220), the lubricant draining off the lubricant deflector (216) into said bore by the action of gravity,
**characterized in that** the lubricant deflector (216) as a first alternative has an impact surface (222) which is oriented parallel to a longitudinal axis (224) of the shaft (210) so that the lubricant is spun onto the impact surface (222) and runs down the lubricant deflector (216), or the lubricant deflector (216) as a second alternative is a tube (226) with an opening (228) at an upper end which is provided counter to the rotational direction of the shaft (210), so that lubricant is conveyed into the opening (228) by the rotation and runs down inside the tube (226).

2. Lubrication arrangement (200) according to Claim 1, wherein the lubricant deflector (216) is directly fastened in the bore (220).

3. Lubrication arrangement (200) according to either of the preceding Claims 1 and 2, wherein
the lubricant deflector (216) of the first alternative has a substantially L-shaped cross section.

4. Lubrication arrangement (200) according to either of the preceding Claims 1 and 2, wherein the lubricant deflector (216) of the first alternative has a substantially U-shaped cross section.

5. Transmission arrangement (230) comprising a lubrication arrangement (200) according to one of Claims 1 to 4.

6. Harvesting machine (100), comprising a lubrication arrangement (200) according to one of Claims 1 to 4.

## Revendications

1. Agencement de lubrification (200), présentant
au moins un boîtier (110),
au moins un arbre (210),
au moins un palier (212) adapté pour maintenir et faire tourner l'arbre (210) dans le boîtier (110),
du lubrifiant, qui est distribué dans le boîtier (110) lors de la rotation de l'arbre (210),
un déflecteur de lubrifiant (216), qui est prévu de manière fixe par rapport au boîtier (110) au-dessus de l'arbre (210),
du lubrifiant arrivant sur le déflecteur de lubrifiant (216) et, sous l'effet de la gravité, le lubrifiant étant dirigé vers le palier (212) de l'arbre (210), de telle sorte que le palier (212) est alimenté en lubrifiant,
le boîtier (110) présentant un alésage (220) dans lequel le lubrifiant est évacué depuis le déflecteur de lubrifiant (216) sous l'effet de la gravité,
**caractérisé en ce que** le déflecteur de lubrifiant (216) présente, comme première alternative, une surface d'impact (222) orientée parallèlement à un axe longitudinal (224) de l'arbre (210), de telle sorte que le lubrifiant est projeté sur la surface d'impact (222) et s'écoule sur le déflecteur de lubrifiant (216), ou le déflecteur de lubrifiant (216) est, comme deuxième alternative, un tube (226), avec une ouverture (228) à une extrémité supérieure qui est prévue à l'encontre de la direction de rotation de l'arbre (210), de telle sorte que du lubrifiant est transporté dans l'ouverture (228) par la rotation et s'écoule à l'intérieur du tube (226).

2. Agencement de lubrification (200) selon la revendication 1, dans lequel le déflecteur de lubrifiant (216) est fixé directement dans l'alésage (220).

3. Agencement de lubrification (200) selon l'une quelconque des revendications 1 à 2 précédentes, dans lequel
le déflecteur de lubrifiant (216) de la première alternative présente une section transversale essentiellement en forme de L.

4. Agencement de lubrification (200) selon l'une quelconque des revendications 1 à 2 précédentes, dans lequel le déflecteur de lubrifiant (216) de la première alternative présente une section transversale essentiellement en forme de U.

5. Agencement de transmission (230) présentant un agencement de lubrification (200) selon l'une quelconque des revendications 1 à 4.

6. Moissonneuse (100), présentant un agencement de lubrification (200) selon l'une quelconque des revendications 1 à 4.
